# EUROPEAN PATENT APPLICATION

(11) **EP 3 588 029 A1**
(43) Date of publication of application: **01.01.2020**
(21) Application number: 19181955.6
(22) Date of filing: 24.06.2019
(51) Int. Cl.: G01K 3/00, G01K 11/12, G01K 11/16, B41J 2/32, B41J 3/407

(54) **TEMPERATURE DETECTION DEVICE, TEMPERATURE DETECTION DEVICE ISSUING APPARATUS, AND TEMPERATURE DETECTION METHOD**

(30) Priority: 27.06.2018 JP 2018121544
(71) Applicant: Seiko Instruments Inc., Chiba-shi, Chiba 261-8507 (JP)
(72) Inventor: SAMBONGI, Norimitsu, Chiba-shi, Chiba 261-8507 (JP); SATO, Yoshinori, Chiba-shi, Chiba 261-8507 (JP); YAMAMOTO, Takashi, Chiba-shi, Chiba 261-8507 (JP)
(74) Representative: Miller Sturt Kenyon

(57) **Abstract**

A temperature detection device (1), includes: a base material (2); and a temperature indicator (3), which is provided on the base material (2), which contains a reversible heat discoloration composition material having color change temperature hysteresis in a normal temperature environment, and which changes color when a detected temperature reaches a threshold value or lower.

## Description

### BACKGROUND OF THE INVENTION

### 1. Field of the Invention

The present invention relates to a temperature detection device, a temperature detection device issuing apparatus, and a temperature detection method.

### 2. Description of the Related Art

Medicines and other products generally require paying attention to the time elapsed since manufacture or the breaking of the seal, and to the storage temperature environment. A user of a medicine recognizes use-by date information of the medicine from information printed on, or output from a printer, by a company that has manufactured the medicine.

Most types of medicines also require proper management of their storage state in terms of temperature environment and the like. For instance, formulated drugs of biological origin are extremely unstable among medicines, and accordingly require particularly strict temperature management, mainly at 2°C or higher and 8°C or lower. When the temperature deviates from this temperature management range, the three-dimensional structure of a protein breaks, which makes it highly likely for a stored drug to fail in exerting a proper level of potency. In this temperature management, while the high temperature-side management is important, the low temperature-side management is important as well because deviation from a management value on the low temperature side causes the stored drug to freeze. A drug in a liquid form, for example, a vaccine, may lose its potency as a medicine when frozen. A medicine is able to exert its effect only when the storage state of the medicine is properly managed.

Among formulated drugs of biological origin, liquid-form medicines, in particular, are expected to keep increasing in number. Proper temperature management of each individual product of those medicines is therefore becoming more and more important. Whether a medicine is managed at an appropriate temperature requires to be monitored by not only a person who uses the medicine but also companies that participate in the manufacturing, selling, and the like of the medicine. In the case of vaccines and other liquid-form drugs, in particular, it is very important to know whether the temperature has deviated on the low temperature side during the storage of a drug, or whether the stored drug has frozen.

At present, temperature management in the process of manufacturing, storing, shipping, and the like of a medicine uses an electronic measuring instrument set in a facility in which the medicine is managed. In temperature management using an electronic measuring instrument, the electronic measuring instrument is required to be connected to a computer or the like to which a history of measured temperatures is output in order to record the temperature history. Electronic measuring instruments are not suitable for the temperature management of medicines because electronic measuring instruments have a battery driven-type operation principle, which means too high a cost and too large a size to be installed and to manage temperature for each individual package of medicine, and because the operation of keeping track of temperature history is cumbersome as described above, which means that electronic measuring instruments are not easy to handle.

Other temperature management tools include thermo labels, which use a thermo-sensitive ink material. Thermo labels, though easy to handle, spontaneously react to a temperature equal to or higher than a specific temperature by developing color, and require to be stored at a temperature lower than a measured temperature before use due to the lack of a temperature detection starting function. The color developing reaction of a thermo-sensitive ink material is reversible, and objects whose temperature can be detected by thermo labels and scenes in which thermo labels can be used are accordingly limited when the labels' validity as an evidence in temperature management is to be secured. It is also difficult with thermo labels to measure temperature with high precision. Other temperature management technologies include a technology that uses a difference in shrinkage ratio between materials and a technology that uses the clouding of a colloid aqueous solution. Those technologies, however, are not suitable for the temperature management of medicines because a tag, a label, or the like that is small-sized, light weight, and thin is required in order to manage each individual package of medicine.

A material using a photochromic compound, for example, is known as a temperature history display material. The photochromic compound of the temperature history display material develops color when exposed to an ultraviolet ray, stably maintains the color-developed state under visible light, and irreversibly loses color when heated. With this temperature history display material, the function of developing color by ultraviolet irradiation and the function of irreversibly losing color by heating at a specific temperature makes it simple to manage a temperature rise while securing the validity as an evidence.

There are a limited number of technologies with which temperature deviation on the low temperature side is managed whereas various technologies exist to manage temperature deviation on the high temperature side. Therefore, a technology capable of managing temperature deviation on the low temperature side with the use of a small-sized, light-weight tool while securing the usefulness as an evidence is accordingly waited for in this type of fields.

### SUMMARY OF THE INVENTION

According to one embodiment of the present invention, there is provided a temperature detection device, including: a base material; and a temperature indicator, which is provided on the base material, which contains a reversible heat discoloration composition material having color change temperature hysteresis in a normal temperature environment, and which changes color when a detected temperature reaches a threshold value or lower.

In the above-mentioned temperature detection device according to the one embodiment of the temperature detection device, preferably the base material is shaped like a sheet.

In the above-mentioned temperature detection device according to the one embodiment of the temperature detection device, preferably the temperature detection device further includes a start information print reserved portion, which is provided on the base material and in which start information about start of temperature detection is to be printed.

In the above-mentioned temperature detection device according to the one embodiment of the temperature detection device, preferably the start information print reserved portion is provided on the same surface of the base material as an installation surface on which the temperature indicator is installed.

In the above-mentioned temperature detection device according to the one embodiment of the temperature detection device, preferably the start information print reserved portion includes a thermal recording layer.

In the above-mentioned temperature detection device according to the one embodiment of the temperature detection device, preferably the temperature indicator develops color when the detected temperature is equal to or lower than the threshold value, and loses color when the detected temperature is equal to or higher than a second threshold value, which is higher than the threshold value.

In the above-mentioned temperature detection device according to the one embodiment of the temperature detection device, preferably only one temperature indicator is provided, and a color development start temperature of the one temperature indicator is set to a freezing temperature of an object whose temperature is to be detected.

In the above-mentioned temperature detection device according to the one embodiment of the temperature detection device, preferably a plurality of temperature indicators are provided, wherein the plurality of temperature indicators include: a first indicator; and a second indicator, which has a higher color development start temperature than the first indicator.

In the above-mentioned temperature detection device according to the one embodiment of the temperature detection device, preferably the color development start temperature of the first indicator is set to a freezing temperature of an object whose temperature is to be detected, and preferably the color development start temperature of the second indicator is set to a lower limit value of a proper storage temperature range of the object, which is higher than the freezing temperature.

In the above-mentioned temperature detection device according to the one embodiment of the temperature detection device, preferably the temperature detection device further includes a second temperature indicator, which is provided on the base material, which contains an irreversible heat discoloration composition material, which maintains a color loss state when the detected temperature is equal to or lower than an upper limit value of a normal environment temperature range, and which develops color when the detected temperature exceeds the upper limit value of the normal environment temperature range.

According to one embodiment of the present invention, there is provided a temperature detection device issuing apparatus with which the above-mentioned temperature detection device, including: a heating unit capable of heating the temperature indicator; a printing unit capable of printing the start information on the temperature detection device; and a control unit configured to control the heating unit and the printing unit.

According to one embodiment of the present invention, there is provided a temperature detection method using the above-mentioned temperature detection device to detect a lower limit storage temperature range of an object whose temperature is to be detected.

According to one embodiment of the present invention, there is provided a temperature detection device, including: a base material; a temperature indicator, which is provided on the base material, which contains a reversible heat discoloration composition material having color change temperature hysteresis in a normal temperature environment, and which develops color when a detected temperature reaches a threshold value or lower; and a start information print reserved portion, which is provided on the same surface of the base material as an installation surface where the temperature indicator is installed, and in which start information about start of temperature detection is to be printed.

According to one embodiment of the present invention, there is provided a temperature detection device issuing apparatus with which a temperature detection device including a temperature indicator is issued, the temperature indicator containing a reversible heat discoloration composition material that has color change temperature hysteresis in a normal temperature environment, the temperature indicator developing color when a detected temperature is equal to or lower than a threshold value, the temperature indicator losing color when the detected temperature is equal to or higher than a second threshold value, which is higher than the threshold value, the temperature detection device issuing apparatus, including: a heating unit capable of heating the temperature indicator to a temperature equal to or higher than the second threshold value; a printing unit capable of printing start information on the temperature detection device; and a control unit configured to control the heating unit and the printing unit.

According to one embodiment of the present invention, there is provided a temperature detection method using a temperature detection device that includes a temperature indicator to detect a lower limit storage temperature range of an object whose temperature is to be detected, the temperature indicator containing a reversible heat discoloration composition material that has color change temperature hysteresis in a normal temperature environment, the temperature indicator developing color when a detected temperature is equal to or lower than a threshold value, the temperature indicator losing color when the detected temperature is equal to or higher than a second threshold value, which is higher than the threshold value, the temperature detection method, including: heating the temperature indicator to a temperature equal to or higher than the second threshold value; and printing start information on the temperature detection device.

### BRIEF DESCRIPTION OF THE DRAWINGS

Embodiments of the present invention will now be described by way of further example only and with reference to the accompanying drawings, in which:
FIG. 1 is a plan view of a temperature detection device according to an embodiment of the present invention.
FIG. 2 is a graph for showing temperature-color density characteristics of a low temperature detection indicator in the embodiment.
FIG. 3 is a graph for showing temperature-color density characteristics of a high temperature detection indicator in the embodiment.
FIG. 4 is a graph for showing the temperature-color density characteristics of the low temperature detection indicator along with the temperature-color density characteristics of the high temperature detection indicator in the embodiment.
FIG. 5 is a side view of a temperature detection device issuing apparatus according to the embodiment.
FIG. 6 is a plan view of the temperature detection device issuing apparatus according to the embodiment.
FIG. 7 is a chart for illustrating an example of the operation of the temperature detection device issuing apparatus according to the embodiment.
FIG. 8A, FIG. 8B, FIG. 8C, and FIG. 8D are a process chart for illustrating an example of a temperature detection method according to the embodiment, in which FIG. 8A is a diagram of a label in a stored state, FIG. 8B is an explanatory diagram of a heating step and a printing step, FIG. 8C is an explanatory diagram of the action of the low temperature detection indicator, and FIG. 8D is an explanatory diagram of the action of the high temperature detection indicator.
FIG. 9 is a plan view of a temperature detection device according to a first modification example of the embodiment.
FIG. 10 is a graph for showing temperature-color density characteristics of a first low temperature detection indicator and a second low temperature detection indicator along with the temperature-color density characteristics of the high temperature detection indicator in the first modification example of the embodiment.
FIG. 11 is a plan view of a temperature detection device issuing apparatus according to the first modification example of the embodiment.

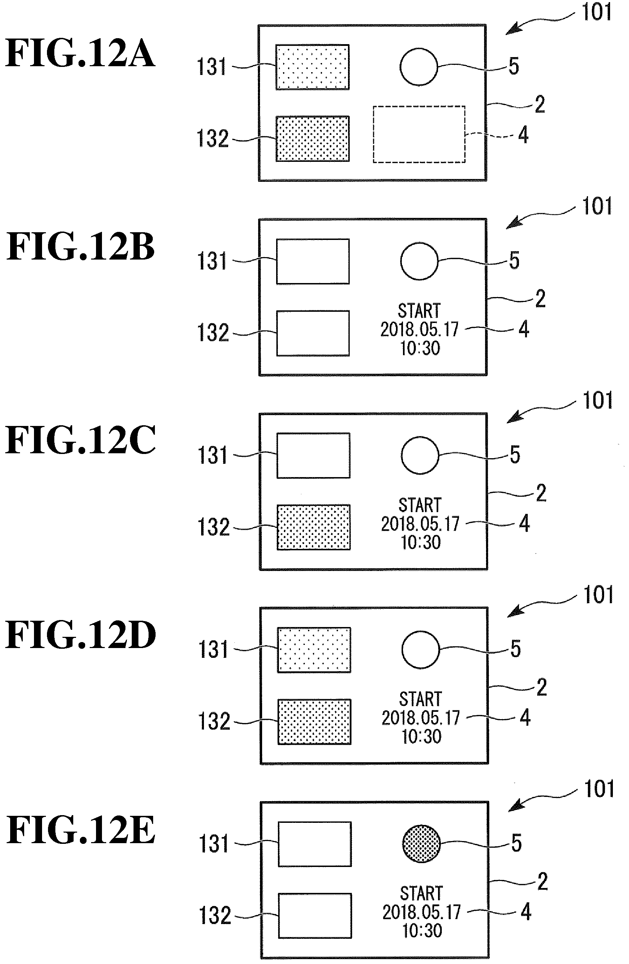

FIG. 12A, FIG. 12B, FIG. 12C, FIG. 12D, and FIG. 12E are a process chart for illustrating an example of a temperature detection method according to the first modification example of the embodiment, in which FIG. 12A is a diagram of a label in a stored state, FIG. 12B is an explanatory diagram of a heating step and a printing step, FIG. 12C is an explanatory diagram of the action of the second low temperature detection indicator, FIG. 12D is an explanatory diagram of the action of the first low temperature detection indicator, and FIG. 12E is an explanatory diagram of the action of the high temperature detection indicator.
FIG. 13 is a plan view of a temperature detection device according to a second modification example of the embodiment.

### DESCRIPTION OF THE EMBODIMENTS

An embodiment of the present invention is described below with reference to the drawings. In the description given below on the embodiment, the temperature of a medicine that requires to be stored at a low temperature is to be detected, and a label that can be pasted on the medicine is taken as an example of a temperature detection device. The medicine has, for example, a proper storage temperature range of 5°C±3°C (2°C or more and 8°C or lower) and a freezing temperature of approximately -10°C. The scales of the members in the drawings referred to in the following description are changed suitably in order to illustrate each member in a recognizable size.

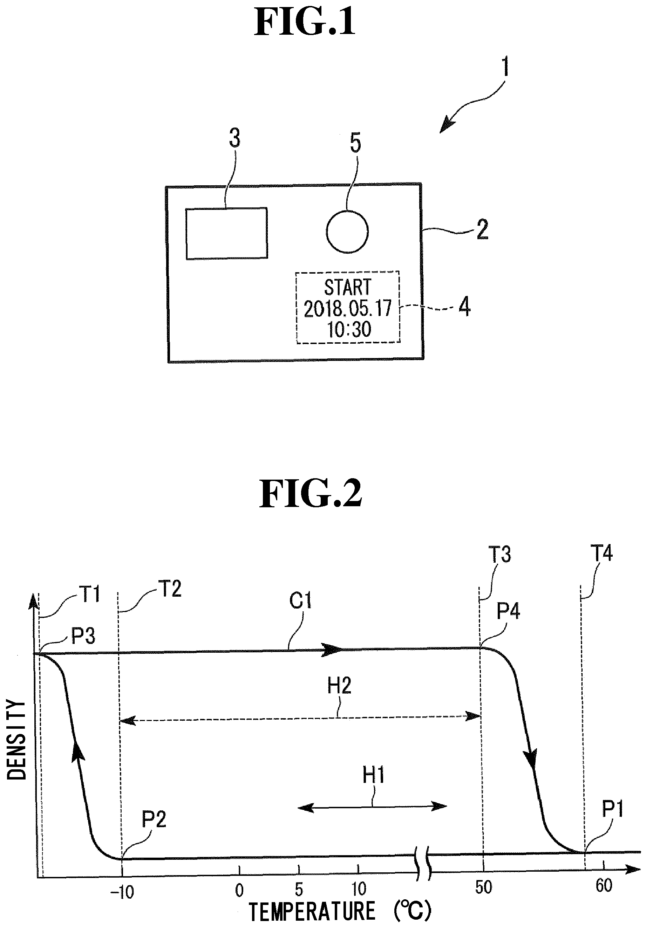

FIG. 1 is a plan view of a temperature detection device 1 according to the embodiment. As illustrated in FIG. 1, the temperature detection device 1 includes a base material 2, a low temperature detection indicator 3 (a temperature indicator), a start information print reserved portion 4, and a high temperature detection indicator 5 (a second temperature indicator).

The base material 2 has a rectangular sheet shape in plan view. The base material 2 is a heat-sensitive paper label. The base material 2 is thick enough to support the low temperature detection indicator 3, the high temperature detection indicator 5, and others. For example, a preferred thickness of the base material 2 from the viewpoint of improving the printing quality is 10 µm or more and 100 µm or less.

A pressure-sensitive adhesive layer may be provided on a back surface of the base material 2 (a surface opposite from an installation surface on which the low temperature detection indicator 3 is installed). This provides a temperature detection device that can be pasted when in use on a medicine whose temperature is to be detected.

Only one low temperature detection indicator 3 is provided on a first surface of the base material 2. The low temperature detection indicator 3 contains a reversible heat discoloration composition material that has color change temperature hysteresis in a normal temperature environment. The low temperature detection indicator 3 develops color (changes color) when the detected temperature is equal to or lower than a threshold value. "Develop color" means turning from colorless to colored. A color development start temperature of the low temperature detection indicator 3 is set to, for example, the freezing temperature of the medicine whose temperature is to be detected (e.g., approximately -10°C). "Color development start" means the start of color development from a colorless state.

The low temperature detection indicator 3 loses color when the detected temperature is equal to or higher than a second threshold value, which is higher than the threshold value. "Lose color" means a change from colored to colorless.

The low temperature detection indicator 3 is made from a thermo-sensitive member in which the reversible heat discoloration composition material is encapsulated in a microcapsule.

The reversible heat discoloration composition material contains, for example, an electron donating, color rendering, organic compound (a color forming agent), an electron accepting compound (a color developing agent), and a color changing temperature adjusting agent. The reversible heat discoloration composition material may contain other components, for example, an ultraviolet absorbing agent, an infrared absorbing agent, an antioxidizing agent, a non-heat discoloration colorant, a non-color changing dye, a fluorescent whitening agent, a surfactant agent, an antifoaming agent, a leveling agent, a solvent, and a thickening agent. The microcapsule may be manufactured by, for example, a known method of interfacial polymerization, in-situ polymerization, submerged curing coating, phase separation from an aqueous solution, phase separation from an organic solvent, melting dispersion cooling, air suspension coating, or spray draying.

FIG. 2 is a graph for showing temperature-color density characteristics of the low temperature detection indicator 3 in the embodiment. In FIG. 2, the horizontal axis indicates the detected temperature (temperature (°C)) of the low temperature detection indicator 3, and the vertical axis indicates the color density (density) of the low temperature detection indicator 3. A reference symbol "C1 " in FIG. 2 represents a temperature-color density characteristics curve of the low temperature detection indicator 3 (the reversible heat discoloration composition material), reference symbols P1 to P4 represent steps of a color changing process, a reference symbol "T1" represents a color development completion temperature, a reference symbol "T2" represents a color development start temperature, a reference symbol "T3" represents a color loss start temperature, a reference symbol "T4" represents a color loss completion temperature (a reset temperature), a reference symbol "HI" represents a normal environment temperature range (hereinafter may simply be referred to as "normal temperature range"), and a reference symbol "H2" represents a color development-color loss temperature difference. "Color development completion" means that a saturated color (a thoroughly developed color) has been reached, whereby an increase in color density stops. "Color loss start" means that a colorless state (a thoroughly depleted color) has been reached, whereby a decrease in color density stops.

The low temperature detection indicator 3 undergoes a reversible color changing process including process steps P1 to P4. In the process of temperature decrease (a color changing process P1 → P2 → P3), the low temperature detection indicator 3 changes color from a color loss completion (colorless) state, to a normal temperature range colorless state, a color development start state, a color developing state, and a color development completion (saturated color) state in the stated order. In the process of temperature increase (a color changing process P3 → P4 → PI), the low temperature detection indicator 3 changes color from the color development completion (saturated color) state, to a normal temperature range colored state, a color loss start state, a color losing state, and the color loss completion (colorless) state in the stated order. The low temperature detection indicator 3 is in a colorless state and a colored state in the normal temperature range.

At the color changing process step PI, the detected temperature of the low temperature detection indicator 3 is equal to or higher than the color loss completion temperature T4 and the color of the low temperature detection indicator 3 is completely lost. In the normal temperature range HI, the low temperature detection indicator 3 maintains the state in which the color is completely lost. When the detected temperature reaches the color development start temperature T2 or lower, the low temperature detection indicator 3 starts developing color (the color changing process step P2). As the detected temperature subsequently drops, the color density of the low temperature detection indicator 3 increases. When the detected temperature reaches the color development completion temperature T1 or lower, the low temperature detection indicator 3 completes developing color (the color changing process step P3). When the color development start temperature is equal to the freezing temperature, for example, the low temperature detection indicator 3 indicates by its colored state that the medicine has frozen at one point.

At the color changing process step P3, the detected temperature of the low temperature detection indicator 3 is equal to or lower than the color development completion temperature T1 and the color of the low temperature detection indicator 3 is completely developed. In the normal temperature range HI, the low temperature detection indicator 3 maintains the state in which the color is completely developed. When the detected temperature reaches the color loss start temperature T3 or higher, the low temperature detection indicator 3 starts losing color (the color changing process step P4). As the detected temperature subsequently rises, the color density of the low temperature detection indicator 3 decreases. When the detected temperature reaches the color loss completion temperature T4 or higher, the low temperature detection indicator 3 completes losing color (the color changing process step P1). The low temperature detection indicator 3 can accordingly be initialized (reset) by heating the low temperature detection indicator 3 to the color loss completion temperature T4 or higher before the low temperature detection indicator 3 is issued.

The color development-color loss temperature difference H2 means a difference between the color development start temperature T2 and the color loss start temperature T3. The color development-color loss temperature difference H2 encompasses the entire normal temperature range HI. In other words, the color development start temperature T2 is set lower than the lower limit value of the normal temperature range H1 and the color loss start temperature T3 is set higher than the upper limit value of the normal temperature range H1. The low temperature detection indicator 3 accordingly does not develop color from a color loss state nor lose color from a color developed state at a normal label storage environment temperature (the normal temperature range HI).

However, when the color development start temperature T2 is 2°C, for example, the low temperature detection indicator 3 stored in winter or in cold climates may develop color. The low temperature detection indicator 3 is therefore caused to lose color by heating to the color loss completion temperature T4 or higher prior to use (before the temperature detection device is issued), thus securing the reliability of the label (the temperature detection device).

The start information print reserved portion 4 is an area in which start information about the start of temperature detection is to be printed. As illustrated in FIG. 1, the start information print reserved portion 4 is set on the first surface of the base material 2. The start information print reserved portion 4 is set on the same surface of the base material 2 as the installation surface on which the low temperature detection indicator 3 is installed. The start information print reserved portion 4 includes a thermal recording layer. In the embodiment, the base material 2 is a heat-sensitive paper label and the start information print reserved portion 4 is accordingly an area that is a part of the base material 2.

The start information print reserved portion 4 is partially heated with a thermal printer or the like, thereby changing color and forming printed letters. In the example of FIG. 1, start information (a date/time or the like) about the start of temperature detection is printed in the start information print reserved portion 4. The start information about the start of temperature detection indicates a time at which the low temperature detection indicator 3 loses color (a time at which the low temperature detection indicator 3 is initialized).

The high temperature detection indicator 5 is provided on the first surface of the base material 2. The high temperature detection indicator 5 is provided on the same surface of the base material 2 as the installation surface on which the low temperature detection indicator 3 is installed. The high temperature detection indicator 5 contains an irreversible heat discoloration composition material. The high temperature detection indicator 5 maintains a color loss state when the detected temperature is equal to or lower than the upper limit value of the normal environment temperature range. The high temperature detection indicator 5 develops color when the detected temperature exceeds the upper limit value of the normal environment temperature range.

The high temperature detection indicator 5 is made from a thermo-sensitive member containing an irreversible heat discoloration composition material. Examples of the thermo-sensitive member containing an irreversible heat discoloration composition material include a leuco-based, heat-sensitive, color developing material (a leuco type), which develops color when heating causes a dye (a leuco dye) and a color developing agent to form a chemical bond, and a fusion type, which develops color by utilizing fusion characteristics of wax.

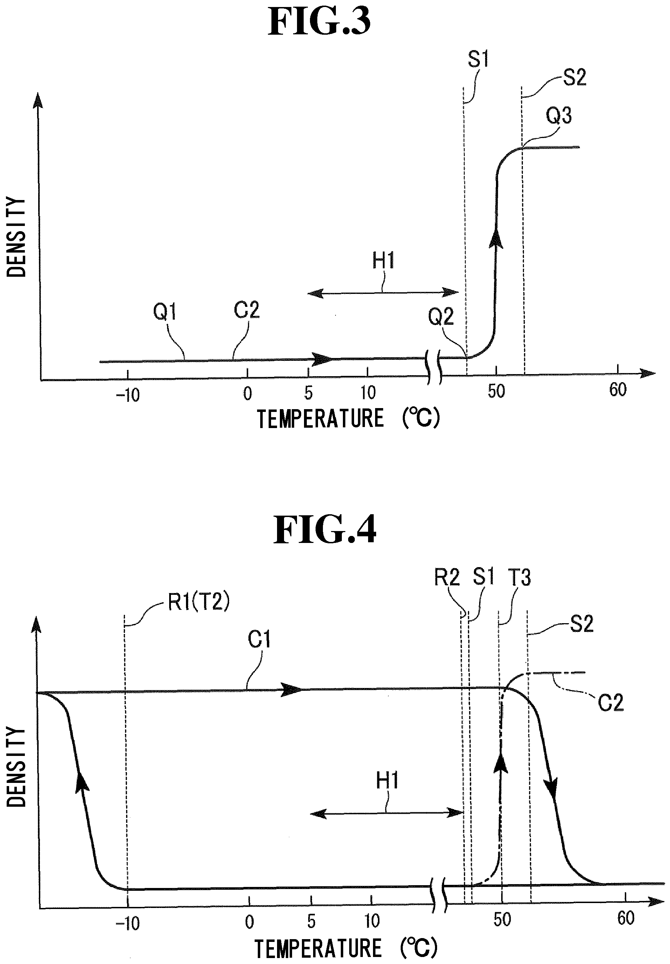

FIG. 3 is a graph for showing temperature-color density characteristics of the high temperature detection indicator 5 in the embodiment. In FIG. 3, the horizontal axis indicates the detected temperature (temperature (°C)), and the vertical axis indicates the color density (density) of the high temperature detection indicator 5. A reference symbol "C2" in FIG. 3 represents a temperature-color density characteristics curve of the high temperature detection indicator 5 (the irreversible heat discoloration composition material), reference symbols Q1 to Q3 represent steps of a color changing process, a reference symbol "S1" represents a color development start temperature, a reference symbol "S2" represents a color development completion temperature.

The high temperature detection indicator 5 undergoes an irreversible color changing process including process steps Q1 to Q3. In the process of temperature increase (a color changing process Q1 → Q2 → Q3), the high temperature detection indicator 5 changes color in the order of a color loss completion (colorless) state, a normal temperature range colorless state, a color development start state, a color developing state, and a color development completion (saturated color) state. After developing color, the high temperature detection indicator 5 does not lose color even if temperature drops, and keeps the saturated color.

At the color changing process step Q1, the detected temperature of the high temperature detection indicator 5 is lower than a lower limit value of the normal temperature range HI, and the color of the high temperature detection indicator 5 is completely lost. The high temperature detection indicator 5 maintains the color loss completion state in the normal temperature range H1. When the detected temperature exceeds the color development start temperature S1, the high temperature detection indicator 5 starts developing color (the color changing process step Q2). As the detected temperature subsequently rises, the color density of the high temperature detection indicator 5 increases. When the detected temperature reaches the color development completion temperature S2 or higher, the high temperature detection indicator 5 completes developing color (the color changing process step Q3). When the color development start temperature S1 exceeds the upper limit value of the normal temperature range HI, for example, the high temperature detection indicator 5 indicates by its colored state that some intentional heating has been performed. Because this is an irreversible reaction, the color of the high temperature detection indicator 5 is not lost and remains even when the temperature subsequently drops, which means that the history can be known. In short, the high temperature detection indicator 5 has the function of indicating whether or not falsification or tampering by intentional heating has taken place. This further improves the reliability (the validity as an evidence).

FIG. 4 is a graph for showing the temperature-color density characteristics of the low temperature detection indicator 3 along with the temperature-color density characteristics of the high temperature detection indicator 5 in the embodiment. In FIG. 4, the horizontal axis indicates the detected temperature (temperature (°C)), and the vertical axis indicates the color density (density). A reference symbol "R1" in FIG. 4 represents the freezing temperature of the medicine whose temperature is to be detected, and a reference symbol "R2" indicates the upper limit value of the normal temperature range H1.

As shown in FIG. 4, the color development start temperature T2 of the low temperature detection indicator 3 is set to the freezing temperature R1 (e.g., approximately -10°C) of the medicine whose temperature is to be detected (T2≈R1). The color development start temperature T2 of the low temperature detection indicator 3 is set lower than the lower limit value of the normal temperature range H1. The color loss start temperature T3 of the low temperature detection indicator 3 is set higher than the upper limit value R2 of the normal temperature range H1 (T3>R2). The color loss start temperature T3 of the low temperature detection indicator 3 is set to, for example, approximately 50°C. The color development start temperature S1 of the high temperature detection indicator 5 is set higher than the upper limit value R2 of the normal temperature range H1 (S1>R2). The color development start temperature S1 of the high temperature detection indicator 5 is set lower than the color loss start temperature T3 of the low temperature detection indicator 3 (S1<T3).

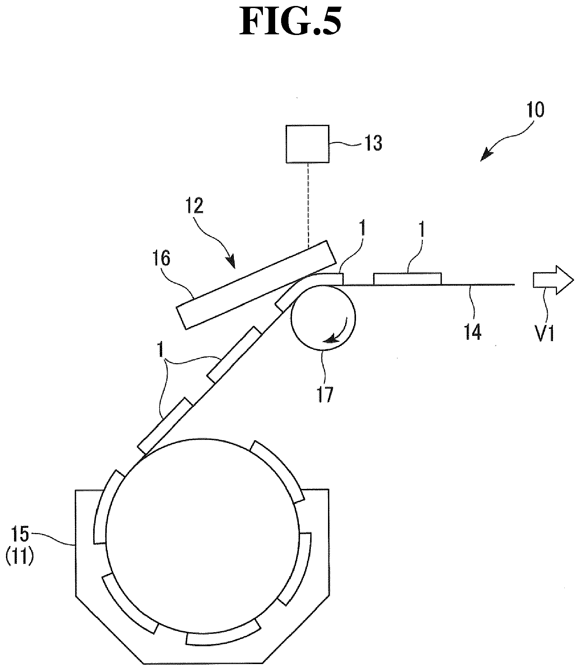

FIG. 5 is a side view of a temperature detection device issuing apparatus 10 according to the embodiment. As illustrated in FIG. 5, the temperature detection device issuing apparatus 10 (hereinafter may simply be referred to as "issuing apparatus 10") includes a base material feeding unit 11, a printing/recording unit 12, and a control unit 13.

The base material feeding unit 11 includes a housing unit 15 in which a rolled sheet 14 is housed. The rolled sheet 14 is a mounting sheet (release paper) wound into a roll. The temperature detection device 1 (a label) is pasted on one surface (a front surface) of the mounting sheet in a removable manner. The housing unit 15 houses the rolled sheet 14 in a manner that allows the rolled sheet 14 to freely rotate about an axis.

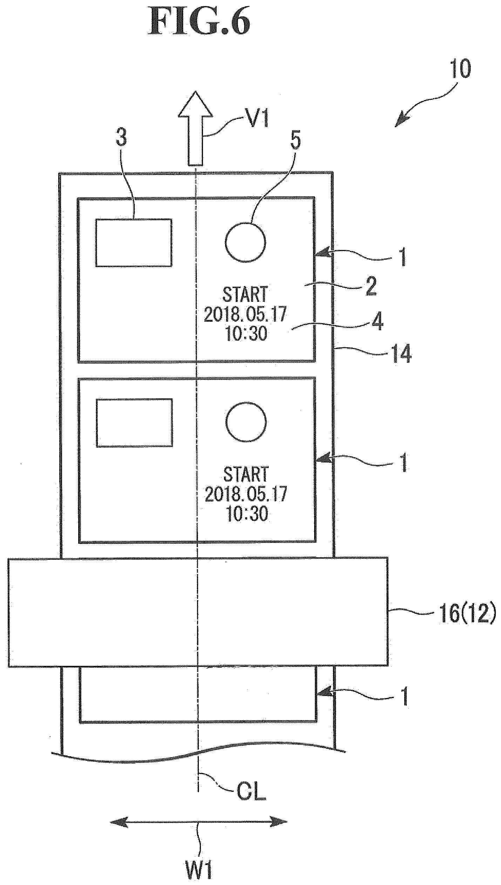

The printing/recording unit 12 includes a thermal head 16 and a platen roller 17. The thermal head 16 functions as a heating unit configured to heat the low temperature detection indicator 3 (see FIG. 6). The thermal head 16 also functions as a printing unit configured to print the start information on the temperature detection device 1. The issuing apparatus 10 has the thermal head 16 as the heating unit and the printing unit. Only one thermal head 16 is provided to serve as both the heating unit and the printing unit.

The thermal head 16 is capable of heating the low temperature detection indicator 3 to a temperature equal to or higher than the second threshold value. When the thermal head 16 heats the low temperature detection indicator 3 to a temperature equal to or higher than the second threshold value (for example, the color loss completion temperature or higher), the high temperature detection indicator 5 maintains the color loss state. The thermal head 16 does not heat the high temperature detection indicator 5 when heating the low temperature detection indicator 3. The thermal head 16 prints by heating a heat-sensitive paper area (e.g., the start information print reserved portion 4) of the temperature detection device 1. As the start information about the start of temperature detection, the thermal head 16 prints a time at which the low temperature detection indicator 3 loses color (a reset time).

The platen roller 17 can sandwich the rolled sheet 14 between the platen roller 17 and the thermal head 16 to convey the temperature detection device 1 together with the rolled sheet 14. The front surface of the rolled sheet 14 (the surface on which the temperature detection device 1 is provided) faces the thermal head 16 in the place where the rolled sheet 14 is sandwiched. A rear surface of the rolled sheet 14 (a surface opposite from the surface on which the temperature detection device 1 is provided) faces the platen roller 17 in the place where the rolled sheet 14 is sandwiched.

The control unit 13 performs integrated control on components of the temperature detection device. The control unit 13 includes, for example, a central processing unit (CPU), a read-only memory (ROM), and a random access memory (RAM), which are connected to one another. The control unit 13 executes, for example, a program stored in advance with the use of the CPU.

The control unit 13 includes a heating control unit, a printing control unit, an information obtaining unit, a timekeeping unit, and a position control unit, which are not shown. The heating control unit controls heating performed by the thermal head 16 (the heating unit) on the temperature detection device. The printing control unit controls printing performed by the thermal head 16 (the printing unit) to print display information on the temperature detection device. The display information is, for example, time information indicating the start time of time detection of the temperature detection device, and product information. The information obtaining unit obtains the time information and the product information. The timekeeping unit counts up to a heating time at which the thermal head 16 (the heating unit) heats the temperature detection device, and outputs time information (the heating time). The position control unit controls the conveyance of the temperature detection device fed from the base material feeding unit 11. For instance, the position control unit controls the rotation of the platen roller 17 (the conveyance of the rolled sheet 14 and the temperature detection device). The position control unit outputs a control signal based on the position of the temperature detection device to the heating control unit and the printing control unit, thereby causing the printing/recording unit 12 (the thermal head 16 and the platen roller 17) to operate.

FIG. 6 is a plan view of the temperature detection device issuing apparatus 10 according to the embodiment. In FIG. 6, an arrow V1 indicates a conveyance direction in which the rolled sheet 14 and the temperature detection device 1 are conveyed, an arrow W1 indicates a width direction orthogonal to the conveyance direction VI, and a reference symbol "CL" indicates a widthwise center line of the temperature detection device 1.

As illustrated in FIG. 6, a plurality of temperature detection devices 1 are provided on the front surface of the rolled sheet 14. The plurality of temperature detection devices 1 are arranged at intervals from each other in the conveyance direction V1. The widthwise center line CL of each temperature detection device 1 is positioned in the middle of a width direction of rolled sheet 14. The length in the width direction of each temperature detection device 1 is shorter than the length of the rolled sheet 14. The length in a width direction of the thermal head 16 is longer than the length of the rolled sheet 14.

The low temperature detection indicator 3 is arranged to the left of the widthwise center line CL of the temperature detection device 1 in plan view. The high temperature detection indicator 5 is arranged to the right of the widthwise center line CL of the temperature detection device 1 (the opposite side from the low temperature detection indicator 3 across the widthwise center line CL) in plan view. The low temperature detection indicator 3 and the high temperature detection indicator 5 are placed in areas on the downstream side of the conveyance direction of the temperature detection device 1 in plan view.

The start information print reserved portion 4 is arranged to the right of the widthwise center line CL of the temperature detection device 1 (the opposite side from the low temperature detection indicator 3 across the widthwise center line CL) in plan view. The start information print reserved portion 4 is placed in an area on the upstream side of the conveyance direction of the temperature detection device 1 (an area upstream of the high temperature detection indicator 5) in plan view.

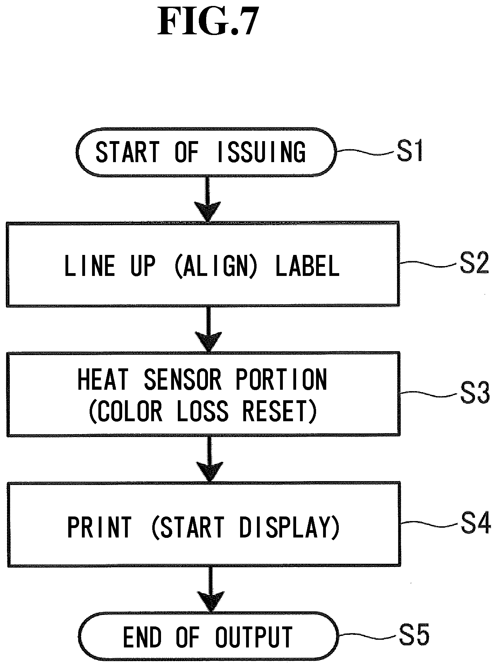

An example of the operation of the issuing apparatus 10 according to the embodiment is described below. FIG. 7 is a chart for illustrating an example of the operation of the temperature detection device issuing apparatus 10 according to the embodiment.

First, an issuing start switch of the issuing apparatus 10 is switched on (Step S1: start of issuing). The head of the temperature detection device (a label) is lined up next. The label is lined up (aligned) with a print start position by, for example, recognizing an alignment mark on the label with the use of a photo interrupter (PI) sensor (Step S2). The lining up of the label may be executed after the preceding label is issued.

A sensor portion (the low temperature detection indicator 3) is heated next (Step S3). For example, the label's sensor portion whose position and shape are determined in advance is scanned to heat a given area with the thermal head 16 to the color loss completion temperature or higher. This initializes the sensor portion (color loss reset).

The temperature at which the sensor portion is heated is controlled by controlling the printer. For example, the applied voltage and the time (the printing speed) are controlled based on the characteristics of the thermal printer. In Step S3, the sensor portion is heated with a minimum amount of heating energy that does not affect the characteristics of the thermo-sensitive member. A pattern in which the sensor portion is heated is set to fit a label pattern determined in advance.

Next, the start information about the start of temperature detection is printed (Step S4). For example, start display such as start time information is printed in a heat-sensitive area that is not the sensor portion. The label is then discharged from the issuing apparatus 10 (Step S5: end of output). For example, the discharged label is peeled from the rolled sheet 14 and pasted on a medicine whose temperature is to be detected.

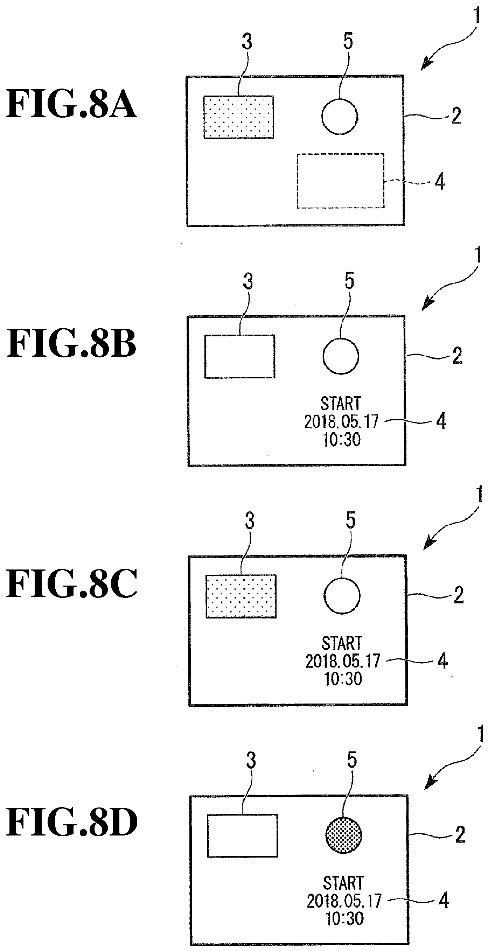

An example of a temperature detection method according to the embodiment is described below. FIG. 8A to FIG. 8D are a process chart for illustrating an example of the temperature detection method according to the embodiment. FIG. 8A is a diagram of the label in a stored state. FIG. 8B is an explanatory diagram of a heating step and a printing step. FIG. 8C is an explanatory diagram of the action of the low temperature detection indicator 3. FIG. 8D is an explanatory diagram of the action of the high temperature detection indicator 5. The temperature detection method uses the temperature detection device to detect a lower limit value of the storage temperature of a medicine. In the embodiment, the color development start temperature of the low temperature detection indicator 3 is set to the freezing temperature of the medicine.

As illustrated in FIG. 8A, the low temperature detection indicator 3 of the label in a stored state develops color in some cases. This is because the storage temperature sometimes drops lower than the color development start temperature of the low temperature detection indicator 3 during storage in winter or in cold climates.

As illustrated in FIG. 8B, the low temperature detection indicator 3 is heated to the color loss completion temperature or higher (the heating step). This initializes (resets) the low temperature detection indicator 3.

In the heating step, the high temperature detection indicator 5 maintains the color loss state during the heating of the low temperature detection indicator 3 to the color loss completion temperature or higher.

The start information is printed in a print area (the printing step). The start information here is a time at which the low temperature detection indicator 3 loses color. The heating step and the printing step both use the same thermal head 16 (see FIG. 6).

As illustrated in FIG. 8C, the low temperature detection indicator 3 develops color when the detected temperature reaches the freezing temperature of the medicine or lower. The low temperature detection indicator 3 develops, for example, a yellow color. The fact that the freezing temperature of the medicine has been reached can be known from the color development of the low temperature detection indicator 3.

As illustrated in FIG. 8D, the high temperature detection indicator 5 develops color when the detected temperature exceeds the upper limit value of the normal temperature range. The high temperature detection indicator 5 develops, for example, a blue color. The fact that the detected temperature has exceeded the upper limit value of the normal temperature environment can be known from the color development of the high temperature detection indicator 5.

As described above, a temperature detection device 1, including: a base material 2; and a low temperature detection indicator 3, which is provided on the base material 2, which contains a reversible heat discoloration composition material having color change temperature hysteresis in a normal temperature environment, and which changes color when a detected temperature reaches a threshold value or lower. According to this embodiment, the temperature detection device 1 is constructed from the base material 2 and the low temperature detection indicator 3, which helps to cause the temperature detection device 1 to decrease in size and weight. The low temperature detection indicator 3, which changes color when the detected temperature reaches a threshold value or lower, can also be used in temperature deviation management in which temperature deviation on the low temperature side is signaled by a change in color of the low temperature detection indicator 3. Temperature deviation on the low temperature side can accordingly be managed with a small-sized, light-weight tool while securing the validity as an evidence. The low temperature detection indicator 3 can easily be checked by, for example, visual check. In addition, the low temperature detection indicator 3, which contains a reversible heat discoloration composition material that has color change temperature hysteresis in a normal temperature environment, can be initialized (reset) by heating the low temperature detection indicator 3 to a given temperature or higher and thus causing the color of the low temperature detection indicator 3 to change.

In this embodiment, the base material 2 is shaped like a sheet. According to this embodiment, the temperature detection device 1 is easily applicable to a tag, label, or the like that is small-sized, light weight, and thin.

In this embodiment, the temperature detection device further includes a start information print reserved portion 4, which is provided on the base material 2. According to this embodiment, when temperature detection starts can be known from the start information, which is information about the start of temperature detection and which is printed in the start information print reserved portion 4.

In this embodiment, the start information print reserved portion 4 is provided on the same surface of the base material 2 as an installation surface on which the low temperature detection indicator 3 is installed. According to this embodiment, it is easier to find the start information about the start of temperature detection along with a color change of the low temperature detection indicator 3 than when the start information print reserved portion 4 is provided on a surface of the base material 2 that is opposite from the installation surface on which the low temperature detection indicator 3 is installed.

In this embodiment, the start information print reserved portion 4 includes a thermal recording layer. According to this embodiment, the start information can be printed with the use of the issuing apparatus 10 that includes a heating unit (for example, a thermal printer). The thermal printer, which is small-sized, light weight, high in printing reliability, and low in cost, can be brought to a place where an object whose temperature is to be detected is stored when temperature detection of the object with the use of the temperature detection device 1 is to be started. In addition, information to be printed on demand can be corrected before the information is printed on the temperature detection device 1.

In this embodiment, the low temperature detection indicator 3 develops color when the detected temperature is equal to or lower than the threshold value, and loses color when the detected temperature is equal to or higher than a second threshold value, which is higher than the threshold value. This embodiment can be used for temperature deviation management in which temperature deviation on the low temperature side is signaled by the color development of the low temperature detection indicator 3. In addition, the low temperature detection indicator 3 can be initialized by heating the low temperature detection indicator 3 to a temperature equal to or higher than the second threshold value, and thus causing the low temperature detection indicator 3 to lose color.

In this embodiment, only one low temperature detection indicator 3 is provided, and a color development start temperature of the one low temperature detection indicator 3 is set to a freezing temperature of an object whose temperature is to be detected. According to this embodiment, the fact that the freezing temperature of the object has been reached can be known from the color development of the low temperature detection indicator 3. In addition, the apparatus configuration can be made simpler and lower in cost compared to a cost in which a plurality of low temperature detection indicators 3 are provided.

In this embodiment, the temperature detection device further includes a high temperature detection indicator 5, which is provided on the base material 2, which contains an irreversible heat discoloration composition material, which maintains a color loss state when the detected temperature is equal to or lower than an upper limit value of a normal environment temperature range, and which develops color when the detected temperature exceeds the upper limit value of the normal environment temperature range. According to this embodiment, the fact that the detected temperature has exceeded the upper limit value of the normal temperature environment can be known from the color development of the high temperature detection indicator 5. Because the color development of the high temperature detection indicator 5 is an irreversible reaction, the color of the high temperature detection indicator 5 is not lost and remains even when the temperature subsequently drops, which means that the history can be known.

A temperature detection device issuing apparatus 10 according to this embodiment is an issuing apparatus 10, with which the temperature detection device 1 described above is issued, and includes a heating unit capable of heating the low temperature detection indicator 3, a printing unit capable of printing the start information on the temperature detection device 1, and a control unit 13 configured to control the heating unit and the printing unit. According to this embodiment, the temperature detection device issuing apparatus 10 with which the temperature detection device 1 described above can be issued is provided.

In this embodiment, the low temperature detection indicator 3 develops color when the detected temperature is equal to or lower than the threshold value and loses color when the detected temperature is equal to or higher than the second threshold value, which is higher than the threshold value, and the heating unit is capable of heating the low temperature detection indicator 3 to a temperature equal to or higher than the second threshold value. This embodiment can be used for temperature deviation management in which temperature deviation on the low temperature side is signaled by the color development of the low temperature detection indicator 3. In addition, the low temperature detection indicator 3 can be initialized by heating the low temperature detection indicator 3 to a temperature equal to or higher than the second threshold value, and thus causing the low temperature detection indicator 3 to lose color.

In this embodiment, the thermal head 16 is included as the heating unit and the printing unit. According to this embodiment, the initialization of the low temperature detection indicator 3 and the printing of the start information can together be executed by the thermal head 16.

In this embodiment, only one thermal head 16 is provided to serve as both the heating unit and the printing unit. According to this embodiment, the apparatus configuration can be made simpler and lower in cost than in a case in which a plurality of thermal heads 16 are provided so that one thermal head 16 serves as the heating unit while another thermal head 16 serves as the printing unit.

The start information in this embodiment is a time at which the low temperature detection indicator 3 loses color. According to this embodiment, because the time at which the low temperature detection indicator 3 loses color is associated as the start information, the length of time elapsed since the loss of color of the low temperature detection indicator 3 can be known, which improves reliability (the validity as an evidence).

In this embodiment, the high temperature detection indicator 5 maintains the color loss state when the heating unit heats the low temperature detection indicator 3 to a temperature equal to or higher than the second threshold value. According to this embodiment, color development in the high temperature detection indicator 5 during the initialization of the low temperature detection indicator 3 can be avoided.

A temperature detection method according to the embodiment uses the temperature detection device 1 to detect a lower limit storage temperature range of an object whose temperature is to be detected. According to this embodiment, the temperature detection method that uses the temperature detection device 1 described above is provided.

The heating step of heating the low temperature detection indicator 3 and the printing step of printing the start information on the temperature detection device 1 are included in this embodiment. According to this embodiment, the low temperature detection indicator 3 can be initialized by heating the low temperature detection indicator 3 to a given temperature or higher in the heating step and thus causing the low temperature detection indicator 3 to change color. The temperature detection start time can be known by printing the start information on the temperature detection device 1 in the printing step.

In this embodiment, the low temperature detection indicator 3 develops color when the detected temperature is equal to or lower than the threshold value and loses color when the detected temperature is equal to or higher than the second threshold value, which is higher than the threshold value, and the heating step heats the low temperature detection indicator 3 to a temperature equal to or higher than the second threshold value. This embodiment can be used for temperature deviation management in which temperature deviation on the low temperature side is signaled by the color development of the low temperature detection indicator 3. In the heating step, the low temperature detection indicator 3 can be initialized by heating the low temperature detection indicator 3 to a temperature equal to or higher than the second threshold value, and thus causing the low temperature detection indicator 3 to lose color.

In this embodiment, the base material 2 includes a thermal recording layer, the print area in which the start information about the start of temperature detection is to be printed is provided in the thermal recording layer, and the thermal head 16 is used to print the start information on the print area in the printing step. According to this embodiment, the start information can be printed in the print area by a simple method that uses the thermal head 16. For example, a thermal printer using thermal recording can be employed. Characteristics of the thermal printer include a very small mechanical hum, a simple structure suitable for reduction in size and weight, and low cost. The thermal printer does not use any type of ink including ink ribbons and ink cartridges, and uses only heat-sensitive paper (a thermal recording layer) as a consumable supply. The running cost can accordingly be kept low by a simple method.

The heating step in this embodiment uses the thermal head 16 to heat the low temperature detection indicator 3 to the color loss completion temperature or higher. According to this embodiment, the low temperature detection indicator 3 can be heated to the color loss completion temperature or higher by a simple method that uses the thermal head 16.

The heating step and the printing step in this embodiment both use the same thermal head 16. According to this embodiment, heating and printing are accomplished by a method simpler than when different thermal heads 16 are used in the heating step and the printing step.

The start information in this embodiment is a time at which the low temperature detection indicator 3 loses color in the printing step. According to this embodiment, because the time at which the low temperature detection indicator 3 loses color is associated as the start information, the length of time elapsed since the loss of color of the low temperature detection indicator 3 can be known, which improves reliability (the validity as an evidence).

In this embodiment, only one low temperature detection indicator 3 is provided, and a color development start temperature of the one low temperature detection indicator 3 is set to a freezing temperature of an object whose temperature is to be detected. According to this embodiment, the fact that the freezing temperature of the object has been reached can be known from the color development of the low temperature detection indicator 3. In addition, the apparatus configuration can be made simpler and lower in cost than in a case in which a plurality of low temperature detection indicators 3 are provided.

In this embodiment, the high temperature detection indicator 5 maintains the color loss state when the heating step heats the low temperature detection indicator 3 to a temperature equal to or higher than the second threshold value. According to this method, color development in the high temperature detection indicator 5 during the initialization of the low temperature detection indicator 3 can be avoided.

### [Modification example]

Note that, the technical scope of the present invention is not limited to the above-mentioned embodiment, but various modifications may be made without departing from the scope of the present invention.

For instance, while the embodiment described above deals with an example in which only one low temperature detection indicator is provided, the present invention is not limited thereto. A plurality of low temperature detection indicators may be provided, for example.

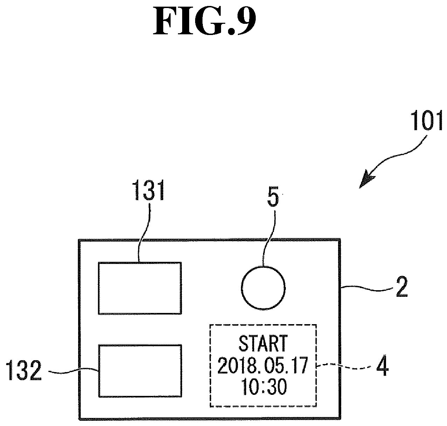

FIG. 9 is a plan view of a temperature detection device 101 according to a first modification example of the embodiment. As illustrated in FIG. 9, the temperature detection device 101 includes a plurality of low temperature detection indicators, here, two low temperature detection indicators 131 and 132. The low temperature detection indicator 131 is a first low temperature detection indicator (a first indicator), and the low temperature detection indicator 132 is a second low temperature detection indicator (a second indicator), which has a higher color development start temperature than the first low temperature detection indicator 131.

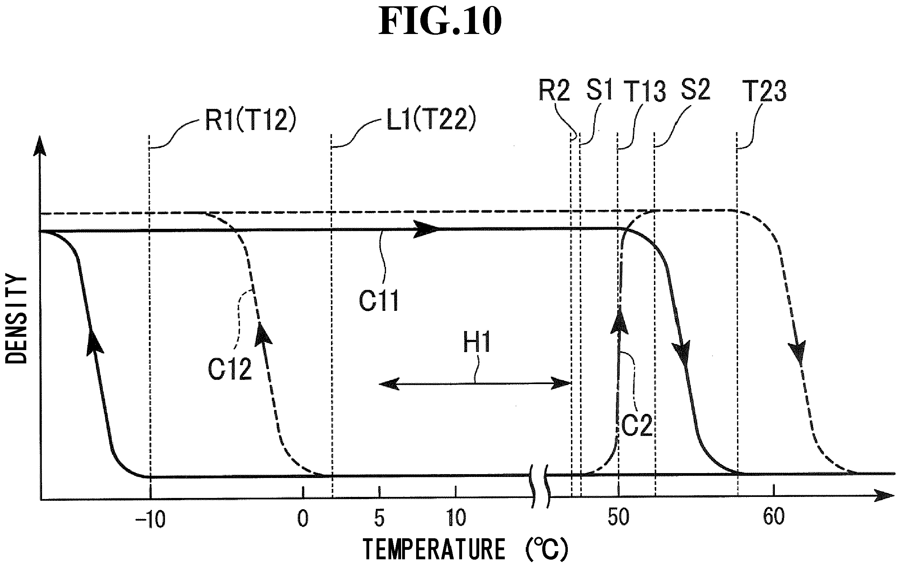

FIG. 10 is a graph for showing temperature-color density characteristics of the first low temperature detection indicator 131 and the second low temperature detection indicator 132 along with the temperature-color density characteristics of the high temperature detection indicator 5 in the first modification example of the embodiment. In FIG. 10, a reference symbol "C11" represents a temperature-color density characteristics curve of the first low temperature detection indicator 131 (a first reversible heat discoloration composition material), a reference symbol "C12" represents a temperature-color density characteristics curve of the second low temperature detection indicator 132 (a second reversible heat discoloration composition material), the reference symbol "C2" represents the temperature-color density characteristics curve of the high temperature detection indicator 5 (the irreversible heat discoloration composition material), a reference symbol "T12" represents a color development start temperature of the first low temperature detection indicator 131, a reference symbol "T22" represents a color development start temperature of the second low temperature detection indicator 132, a reference symbol "T13" represents a color loss start temperature of the first low temperature detection indicator 131, a reference symbol "T23" represents a color loss start temperature of the second low temperature detection indicator 132, the reference symbol "S1" represents the color development start temperature of the high temperature detection indicator 5, the reference symbol "S2" represents the color development completion temperature of the high temperature detection indicator 5, the reference symbol "R1" represents the freezing temperature of a medicine whose temperature is to be detected, the reference symbol "R2" indicates the upper limit value of the normal temperature range HI, and a reference symbol "L1" represents the lower limit value of a proper storage temperature range.

As shown in FIG. 10, the color development start temperature T12 of the first low temperature detection indicator 131 is set to the freezing temperature R1 (e.g., approximately -10°C) of the medicine (T12≈R1).

The color development start temperature T22 of the second low temperature detection indicator 132 is set to the lower limit value L1 (e.g., approximately 2°C) of the proper storage temperature range of the medicine, which is higher than the freezing temperature of the medicine (T22≈L1). The color loss start temperature T13 of the first low temperature detection indicator 131 is set higher than the upper limit value R2 of the normal temperature range H1 (T13>R2). The color loss start temperature T23 of the second low temperature detection indicator 132 is set higher than the color loss start temperature T13 of the first low temperature detection indicator 131 (T23>T13). The color development start temperature S1 of the high temperature detection indicator 5 is set higher than the upper limit value R2 of the normal temperature range H1 (S1>R2). The color development start temperature S1 of the high temperature detection indicator 5 is set lower than the color loss start temperature T13 of the first low temperature detection indicator 3 (S1<T13).

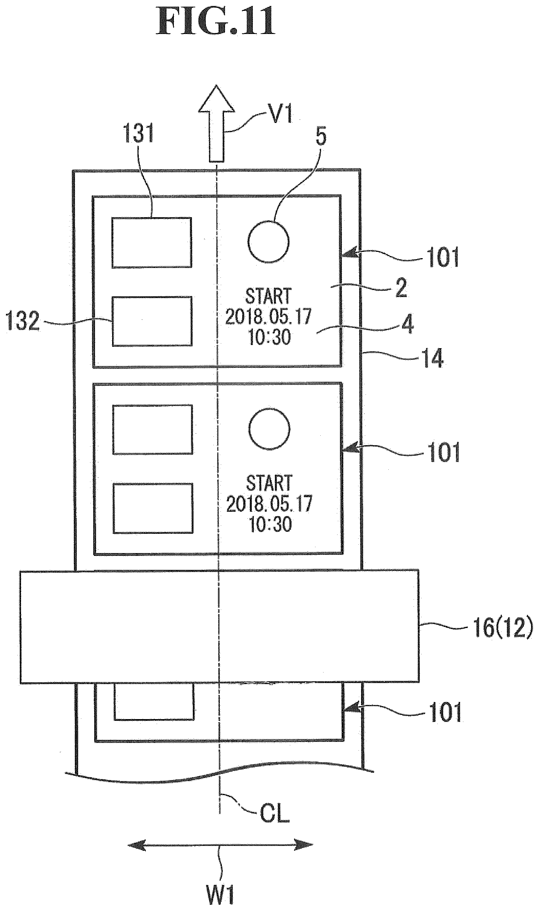

FIG. 11 is a plan view of the temperature detection device issuing apparatus according to the first modification example of the embodiment. In FIG. 11, an arrow V1 indicates a conveyance direction in which the rolled sheet 14 and the temperature detection device 1 are conveyed, an arrow W1 indicates a width direction orthogonal to the conveyance direction VI, and a reference symbol "CL" indicates a widthwise center line of the temperature detection device 101.

As illustrated in FIG. 11, the first low temperature detection indicator 131 and the second low temperature detection indicator 132 are arranged to the left of the widthwise center line CL of the temperature detection device 101 in plan view. The first low temperature detection indicator 131 and the second low temperature detection indicator 132 are arranged at an interval from each other in the conveyance direction V1. The first low temperature detection indicator 131 is placed in an area on the downstream side in the conveyance direction of the temperature detection device 101 in plan view. The second low temperature detection indicator 132 is placed in an area on the upstream side in the conveyance direction of the temperature detection device 101 (an area upstream of the first low temperature detection indicator 131) in plan view.

The thermal head 16 is capable of simultaneously heating the first low temperature detection indicator 131 and the second low temperature detection indicator 132 to their color loss completion temperature or higher. The high temperature detection indicator 5 maintains the color loss state when the thermal head 16 heats the first low temperature detection indicator 131 and the second low temperature detection indicator 132 to the color loss completion temperature or higher.

FIG. 12A to FIG. 12E are a process chart for illustrating an example of a temperature detection method according to the first modification example of the embodiment. FIG. 12A is a diagram of the label in a stored state. FIG. 12B is an explanatory diagram of a heating step and a printing step. FIG. 12C is an explanatory diagram of the action of the second low temperature detection indicator 132. FIG. 12D is an explanatory diagram of the action of the first low temperature detection indicator 131. FIG. 12E is an explanatory diagram of the action of the high temperature detection indicator 5.

The temperature detection method uses the temperature detection device 101, which includes the first low temperature detection indicator 131 and the second low temperature detection indicator 132, to detect the lower limit value of the storage temperature of a medicine. In the first modification example, the color development start temperature of the first low temperature detection indicator 131 is set to the freezing temperature of the medicine. The color development start temperature of the second low temperature detection indicator 132 is set to the lower limit value of the proper storage temperature range of the medicine, which is higher than the freezing temperature of the medicine.

As illustrated in FIG. 12A, the low temperature detection indicator 131 and 132 of the label in a stored state develops color in some cases. This is because the storage temperature sometimes drops lower than the color development start temperature of the low temperature detection indicator 131 and 132 during storage in winter or in cold climates.

As illustrated in FIG. 12B, each of the low temperature detection indicator 131 and 132 is heated to the color loss completion temperature or higher (the heating step). This initializes (resets) each of the low temperature detection indicator 131 and 132. In the heating step, the first low temperature detection indicator 131 and the second low temperature detection indicator 132 are simultaneously heated to the color loss completion temperature or higher. The high temperature detection indicator 5 maintains the color loss state when the first low temperature detection indicator 131 and the second low temperature detection indicator 132 are heated to the color loss completion temperature or higher in the heating step.

The start information is printed in a print area (the printing step). The start information here is a time at which the first low temperature detection indicator 131 and the second low temperature detection indicator 132 lose color. The heating step and the printing step both use the same thermal head 16 (see FIG. 11).

As illustrated in FIG. 12C, the second low temperature detection indicator 132 develops color when the detected temperature reaches the lower limit value of the proper storage temperature range of the medicine or lower. The second low temperature detection indicator 132 develops, for example, a red color. The fact that the lower limit value of the proper storage temperature range of the medicine has been reached can be known from the color development of the second low temperature detection indicator 132.

As illustrated in FIG. 12D, the first low temperature detection indicator 131 develops color when the detected temperature reaches the freezing temperature of the medicine or lower. The color developed by the first low temperature detection indicator 131 differs from the color developed by the second low temperature detection indicator 132. The first low temperature detection indicator 131 develops, for example, a yellow color. The fact that the freezing temperature of the medicine has been reached can be known from the color development of the first low temperature detection indicator 131.

As illustrated in FIG. 12E, the high temperature detection indicator 5 develops color when the detected temperature exceeds the upper limit value of the normal temperature range. The high temperature detection indicator 5 develops, for example, a blue color. The fact that the detected temperature has exceeded the upper limit value of the normal temperature environment can be known from the color development of the high temperature detection indicator 5.

In the first modification example, a plurality of low temperature detection indicators are provided, and include the first low temperature detection indicator 131 and the second low temperature detection indicator 132, which has a higher color development start temperature than the first low temperature detection indicator 131. According to the modification example, temperature deviation on the low temperature side can be managed in stages.

In the first modification example, the color development start temperature of the first low temperature detection indicator 131 is set to the freezing temperature of the medicine, and the color development start temperature of the second low temperature detection indicator 132 is set to the lower limit value of the proper storage temperature range of the medicine, which is higher than the freezing temperature of the medicine. According to the first modification example, the fact that the freezing temperature of the medicine has been reached can be known from the color development of the first low temperature detection indicator 131. The fact that the lower limit value of the proper storage temperature range of the medicine has been reached can also be known from the color development of the second low temperature detection indicator 132.

The thermal head 16 in the first modification example is capable of simultaneously heating the first low temperature detection indicator 131 and the second low temperature detection indicator 132 to the color loss completion temperature or higher. According to the first modification example, the initialization of the first low temperature detection indicator 131 and the initialization of the second low temperature detection indicator 132 can be executed at once.

The embodiment described above deals with an example in which the low temperature detection indicator 3 is arranged to the left of the widthwise center line CL of the temperature detection device 1 and the start information print reserved portion 4 is arranged to the right of the widthwise center line CL of the temperature detection device 1 (the opposite side from the low temperature detection indicator 3 across the widthwise center line CL). However, the present invention is not limited thereto. For instance, the start information print reserved portion 4 may be arranged to the left of the widthwise center line CL of the temperature detection device 1 (the same side of the widthwise center line CL as the low temperature detection indicator 3).

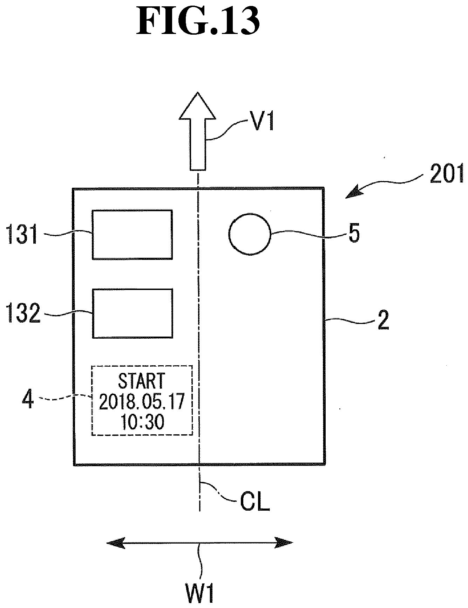

FIG. 13 is a plan view of the temperature detection device 201 according to a second modification of the embodiment. In FIG. 13, an arrow V1 indicates a conveyance direction in which the temperature detection device 201 (rolled sheet 14) is conveyed, an arrow W1 indicates a width direction orthogonal to the conveyance direction VI, and a reference symbol "CL" indicates a widthwise center line of the temperature detection device 201.

As illustrated in FIG. 13, the first low temperature detection indicator 131, the second low temperature detection indicator 132, and the start information print reserved portion 4 are arranged to the left of the widthwise center line CL (the opposite side from the high temperature detection indicator 5 across the widthwise center line CL) in plan view. The first low temperature detection indicator 131, the second low temperature detection indicator 132, and the start information print reserved portion 4 are arranged at intervals from each other in the conveyance direction V1. The first low temperature detection indicator 131 is placed in an area on the downstream side in the conveyance direction of the temperature detection device 201 in plan view. The second low temperature detection indicator 132 is placed in an area upstream of the first low temperature detection indicator 131 in plan view. The start information print reserved portion 4 is placed in an area upstream of the second low temperature detection indicator 132 in plan view.

In the second modification example, the first low temperature detection indicator 131, the second low temperature detection indicator 132, and the start information print reserved portion 4 are arranged on the opposite side from the high temperature detection indicator 5 across the widthwise center line CL of the temperature detection device 201 in plan view. According to the second modification example, areas that allow heating can be concentrated on the opposite side from the high temperature detection indicator 5 across the widthwise center line CL of the temperature detection device 201, and color development in the high temperature detection indicator 5 can accordingly be avoided during the initialization of the low temperature detection indicators 131 and 132 and during the printing in the start information print reserved portion 4.

The embodiment described above deals with an example in which the temperature detection device 1 includes the base material 2, the low temperature detection indicator 3, the start information print reserved portion 4, and the high temperature detection indicator 5, but the present invention is not limited thereto. For instance, the temperature detection device may omit the start information print reserved portion 4 and the high temperature detection indicator 5. The temperature detection device may include only the base material 2 and the low temperature detection indicator 3, for example.

The embodiment described above deals with an example in which the base material 2 is in the form of a sheet, but the present invention is not limited thereto. The base material may be in forms other than the sheet form, for example, the form of a tablet.

The embodiment described above deals with an example in which the start information print reserved portion 4 is provided on the same surface of the base material 2 as the installation surface on which the low temperature detection indicator 3 is installed. However, the present invention is not limited thereto. For instance, the start information print reserved portion 4 may be provided on a surface of the base material 2 that is opposite (different) from the installation surface on which the low temperature detection indicator 3 is installed.

The embodiment described above deals with an example in which the base material 2 is a heat-sensitive paper label and the start information print reserved portion 4 is formed from a partial area of the base material 2, but the present invention is not limited thereto. For instance, a thermal recording layer as the start information print reserved portion 4 may be supported by a partial area of the base material 2 that is synthetic paper or high quality paper.

The embodiment described above deals with an example in which the low temperature detection indicator 3 develops color when the detected temperature is equal to or lower than the threshold value, and loses color when the detected temperature is equal to or higher than the second threshold value, which is higher than the threshold value. However, the present invention is not limited thereto. For instance, the low temperature detection indicator may develop a first color (e.g., a yellow color) when the detected temperature is equal to or lower than the threshold value while developing a second color (e.g., a green color) different from the first color when the detected temperature is equal to or higher than the second threshold value, which is higher than the threshold value. The low temperature detection indicator may change from the second color to the first color when the detected temperature reaches the threshold value or lower while changing from the first color to the second color when the detected temperature reaches the second threshold value or higher.

For example, a reference portion exhibiting a reference color that serves as an index for identifying the color of the low temperature detection indicator 3 may be provided on the front surface (the installation surface on which the low temperature detection indicator 3 is installed) of the base material 2. The color of the low temperature detection indicator 3 can be figured out by visually comparing the low temperature detection indicator 3 against the reference portion. It is preferred for the reference portion to include a colored layer containing a material that is capable of maintaining a desired color intensity without being discolored under the influence of external environment (temperature, light, and the like) and has excellent water resistance and light resistance (e.g., a colorant).

The embodiment described above deals with an example in which an object whose temperature is to be detected is a medicine that requires to be stored at a low temperature, but the present invention is not limited thereto. For instance, the temperature of an object that is not a medicine, e.g., a food, may be detected.

Besides the above, the components in the above-mentioned embodiments may be replaced by well-known components as appropriate without departing from the scope of the present invention.

## Claims

1. A temperature detection device (1), comprising:
a base material (2); and
a temperature indicator (3), which is provided on the base material (2), which contains a reversible heat discoloration composition material having color change temperature hysteresis in a normal temperature environment, and which changes color when a detected temperature reaches a threshold value or lower.

2. The temperature detection device (1) according to claim 1, wherein the base material (2) is shaped like a sheet.

3. The temperature detection device (1) according to claim 1 or claim 2, further comprising a start information print reserved portion (4), which is provided on the base material (2) and in which start information about start of temperature detection is to be printed.

4. The temperature detection device (1) according to claim 3, wherein the start information print reserved portion (4) is provided on the same surface of the base material (2) as an installation surface on which the temperature indicator (3) is installed.

5. The temperature detection device (1) according to claim 3 or claim 4, wherein the start information print reserved portion (4) includes a thermal recording layer.

6. The temperature detection device (1) according to according to any one of the preceding claims, wherein the temperature indicator (3) develops color when the detected temperature is equal to or lower than the threshold value, and loses color when the detected temperature is equal to or higher than a second threshold value, which is higher than the threshold value.

7. The temperature detection device (1) according to claim 6,
wherein only one temperature indicator (3) is provided, and
wherein a color development start temperature of the one temperature indicator (3) is set to a freezing temperature of an object whose temperature is to be detected.

8. The temperature detection device (1) according to claim 6,
wherein a plurality of temperature indicators (131, 132) are provided, and
wherein the plurality of temperature indicators (131, 132) include:
a first indicator (131); and
a second indicator (132), which has a higher color development start temperature than the first indicator (131).

9. The temperature detection device (1) according to claim 8,
wherein the color development start temperature of the first indicator (131) is set to a freezing temperature of an object whose temperature is to be detected, and
wherein the color development start temperature of the second indicator (132) is set to a lower limit value of a proper storage temperature range of the object, which is higher than the freezing temperature.

10. The temperature detection device (1) according to claim 1, further comprising a second temperature indicator (5), which is provided on the base material (2), which contains an irreversible heat discoloration composition material, which maintains a color loss state when the detected temperature is equal to or lower than an upper limit value of a normal environment temperature range, and which develops color when the detected temperature exceeds the upper limit value of the normal environment temperature range.

11. A temperature detection device issuing apparatus (10) with which the temperature detection device (1) according to any one of the preceding claims is issued, comprising:
a heating unit (16) capable of heating the temperature indicator (3);
a printing unit (16) capable of printing the start information on the temperature detection device (1); and
a control unit (13) configured to control the heating unit (16) and the printing unit (16).

12. A temperature detection method using the temperature detection device (1) according to any one of claims 1 to 10 to detect a lower limit storage temperature range of an object whose temperature is to be detected.

13. A temperature detection method according to claim 12 using a temperature detection device (1) that includes a temperature indicator (3) to detect a lower limit storage temperature range of an object whose temperature is to be detected, the temperature indicator (3) containing a reversible heat discoloration composition material that has color change temperature hysteresis in a normal temperature environment, the temperature indicator (3) developing color when a detected temperature is equal to or lower than a threshold value, the temperature indicator (3) losing color when the detected temperature is equal to or higher than a second threshold value, which is higher than the threshold value,
the temperature detection method comprising:
heating the temperature indicator (3) to a temperature equal to or higher than the second threshold value; and
printing start information on the temperature detection device (1).
